# EUROPEAN PATENT APPLICATION

(11) **EP 1 320 262 A1**
(43) Date of publication of application: **18.06.2003**
(21) Application number: 01129845.2
(22) Date of filing: 14.12.2001
(51) Int. Cl.: H04N 7/24

(54) **Functions triggered and synchronised via metadata**

(71) Applicant: DEUTSCHE THOMSON-BRANDT GMBH, 78048 Villingen-Schwenningen (DE)
(72) Inventor: Adolph, Dirk, 30952 Ronnenberg (DE); Blawat, Meinolf, 30161 Hannover (DE); Li, Hui, 30419 Hannover (DE); Schiller, Harald, 30539 Hannover (DE)
(74) Representative: Thies, Stephan

(57) **Abstract**

In order to control the retrieval of video data more sophistically there is provided a method for controlling functions associated with the reception of audio and/or video data. For this controlling information is received from a control source (7), so that at least one function related to the audio and/or video data can be controlled. Consequently it is possible to force, start, trigger and/or synchronize additional functions, for example in order to establish further communication channels under the control of specific metadata.

## Description

The present invention relates to an apparatus and a method for controlling functions associated with a reception of audio and/or video data, e. g. broadcast data, internet audio/video streams.

### Background

Content providers and broadcasting facilities usually deliver additional information linked to basis data, like audio-visual program material. Such additional information is commonly called metadata, whereas the basis data is named essence.

In its nature, metadata is additional information which may give any kind of further explanations or extents to the essence it belongs to. Today, teletext data and RDS (Radio Data System) information can be seen as metadata which is connected with its corresponding basis data.

### Invention

It is the object of the present invention to improve the retrieval of audio and/or video data and associated functions.

According to the present invention this object is solved by a method of controlling functions associated with a reception of audio and/or video data by receiving said audio and/or video data from a data source, receiving controlling information from a control source, and controlling with said controlling information at least one of said functions related to said audio and/or video data.

Furthermore, the above object is solved by a device for controlling functions associated with a reception of audio and/or video data with first receiving means for receiving said audio and/or video data from a data source, e. g. a broadcast source, second receiving means for receiving controlling information from a control source, and controlling means for controlling with said controlling information at least one function related to said audio and/or video data.

Further favourable developments of the inventive method and the inventive apparatuses are defined in the sub-claims.

In the near future, broadcasting facilities will deliver essence to the customers and consumers with corresponding much more sophisticated metadata. Therefore, the present invention provides the possibility to force, start, trigger and/or synchronise additional functions, for example to establish further communication channels which are controlled by specific metadata. It is in general also possible, that the user himself can add every kind of metadata to each conceivable essence data and also edit it. The Metadata generated by the user may include control information, for example for controlling a recorder in a network of devices. Therefore, even if it is spoken of content providers in the following explanation, also users are addressed.

For instance, this invention provides the following enhanced purpose of metadata: Assigned to a defined keyword, named trigger-keyword, or placed at a defined leaf or node of the tree of an hierarchically organised set of metadata, specific actions should take place or should be triggered, respectively. Metadata transmitted for such a reason is named Trigger-Metadata. Especially, Trigger-Metadata that is assigned to a defined keyword may also be delivered over a different communication channel than the essence. Trigger-Metadata may be delivered at any time of the data transmission. If Trigger-Metadata is delivered at a different time than the further action should take place, then dedicated timing information has to be assigned to the Trigger-Metadata. Furthermore, certain events may serve as "Trigger", for example the status of a device or the status of received of generated Metadata like the number of correctly answered questions in a quiz programme.

Different types of Trigger-Metadata may be defined. Each type of Trigger-Metadata represents a specific action that should be processed. As much as technically possible, different types of Trigger-Metadata may be assigned to one particular basis data.

Trigger-Metadata may be hierarchically organised or in other words, they belong to different hierarchical levels of Trigger-Metadata. This hierarchical Trigger-Metadata may be transmitted consecutively or simultaneously. If this is the case, these hierarchical Trigger-Metadata is named Level-Trigger-Metadata.

### Drawing

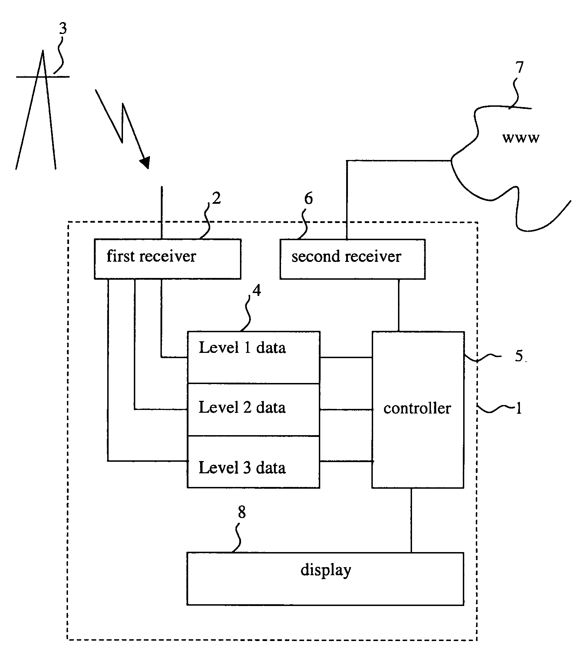

The present invention will be explained in more detail along with the attached drawing showing a principle block diagram of an inventive apparatus for retrieving audio and/or video data under the control of additional information.

### Exemplary embodiments

A first exemplary embodiment is shown in the figure. A TV-set 1 including a first receiver 2 receives audio and/or video data and side information, like metadata, from a broadcast facility 3. The broadcast program, for example a scientific program, is broadcast in different quality levels. In this example the first level is a basis program, e.g. an explanation of a complex chemical process. In the second level additional animations of the process may be presented in parallel to the first level program. In a third level, the possibility of an online-connection may be established and a participation in a question and answer chat may be offered.

Level-1-data, level-2-data and level-3-data may be stored in a memory 4 temporarily. Level-1-data, level-2-data and level-3-data are further input to a controller 5. The controller 5 gets further information from a second receiver 6 receiving controlling information from e.g. the Internet web. On the basis of the controlling information the controller 5 provides data to the display 8 of the TV-set 1.

The memory 4 may be omitted so that data selected by the controller 5 are directly sent to the display 8. Furthermore, the second receiver may be a keyboard for receiving the instructions of a user.

According to a second embodiment of the present invention there are different sport broadcastings. For example, the first level of the audio and/or video data corresponds to the basis sport event, e.g. a soccer match. In the second level every time a player shoots a goal, a table of his hits being provided by third providers is displayed. The information of these third providers may be received over a different communication channel than the basis data. In the third level, some additional photographs may be accessed, which are showing some further events corresponding to the successful soccer player.

In a third embodiment at a specific time an Internet URL may be transmitted, thereby triggering a download process. Alternatively a specific telecommunication channel, e.g. a telephone line, may be established to allow for a further access to another service provider, which may deliver further information to the user.

According to a fourth embodiment of the present invention a summary of a story line adapted to the individual TV-watching behaviour of the user will be started at a specific time of the play. The user may enter that he has missed a foregoing story of the series he is interested in. Then, if some information is necessary to understand the story line, some detailed explanation will be automatically or on demand of the user delivered in a synchronised manner.

Further embodiments provide several additional services. For example, in order to display during advertising spots some third party information the user has demanded for or being offered by the third party, suitable metadata are transmitted.

The following components serve to realise the present invention according to one embodiment: The receiver has to have a certain kind of parser to detect either a defined trigger-keyword or a defined node or leaf of hierarchically organised set of metadata. Additionally, the inventive receiver has to comprise a hardware or software component for carrying out those functions intended by the Trigger-Metadata.

In summary, if broadcasters deliver essence to their customers and consumers with corresponding sophisticated metadata, the present invention provides the possibility to force, start, trigger and/or synchronise additional functions, e.g. to establish further communication channels being controlled on the basis of such specific metadata. Especially side information dedicated to the purpose of annotating arbitrary segments of program material may be transmitted in the metadata.

## Claims

1. Method of controlling functions associated with a reception of audio and/or video data by
receiving said audio and/or video data from a data source (3),
receiving controlling information from a control source (7), and
controlling with said controlling information at least one of said functions related to said audio and/or video data.

2. Method according to claim 1, wherein said controlling information is metadata, preferably a predefined keyword.

3. Method according to claim 1 or 2, wherein said controlling includes starting synchronizing and/or temporarily triggering said at least one function.

4. Method according to one of the claims 1 to 3, wherein said controlling information is organized hierarchically in order to enable structured controlling of multiple functions related to said audio and/or video data.

5. Method according to one of the claims 1 to 4, wherein said control source (7) is identical with said broadcast source (3).

6. Method according to one of the claims 1 to 5, wherein said at least one function includes receiving of additional audio and/or video data, the control of which preferably having a quality different from that of said audio and/or video data, on the same or a different broadcast channel, so that a user can retrieve said audio and/or video data and/or additional audio and/or video data on his demand.

7. Method according to one of the claims 1 to 6, wherein said at least one function includes a download process and/or establishing one or more telecommunication channels.

8. Method according to one of the claims 1 to 7, wherein said controlling information is generated on the basis of individual behaviour of a user in the past.

9. Device for controlling functions associated with a reception of audio and/or video data with
first receiving means (2) for receiving said audio and/or video data from a data source (3),
second receiving means (6) for receiving controlling information from a control source (7), and
controlling means (5) for controlling with said controlling information at least one function related to said audio and/or video data.

10. Device according to claim 9, wherein said controlling information is metadata, preferably a predefined keyword.

11. Device according to claim 9 or 10, wherein said controlling information is triggering information for temporarily triggering said at least one function.

12. Device according to one of the claims 9 to 11, wherein said controlling means enables starting, synchronizing and/or temporarily triggering said at least one function.

13. Device according to one of the claims 9 to 12, wherein said controlling information is organized hierarchically in order to enable structured controlling of multiple functions related to said audio and/or video data.

14. Device according to one of the claims 9 to 13, wherein said control source (7) is identical with said broadcast source (3).

15. Device according to one of the claims 9 to 13, wherein said at least one function includes receiving of additional audio and/or video data, the content of which preferably having a quality different from that of said audio and/or video data, on the same or a different broadcast channel, so that a user can retrieve said audio and/or video data and/or additional audio and/or video data on his demand.

16. Device according to one of the claims 9 to 14, wherein said first and/or second receiving means (2, 6)includes downloading means for establishing a data connection to an external data source.

17. Device according to one of the claims 9 to 15, wherein said controlling means (5) includes editing means, so that the user can individually control said functions.
